(19) Europäisches Patentamt
European Patent Office
Office européen des brevets

(11) EP 0 637 570 B1

(12) **EUROPEAN PATENT SPECIFICATION**

(45) Date of publication and mention of the grant of the patent: **26.08.1998 Bulletin 1998/35**

(21) Application number: **94906933.0**

(22) Date of filing: **11.02.1994**

(51) Int. Cl.$^6$: **C02F 9/00**

(86) International application number: **PCT/ES94/00013**

(87) International publication number: **WO 94/18133 (18.08.1994 Gazette 1994/19)**

(54) **TREATMENT OF SOLID AND LIQUID EFFLUENTS FROM TAN-YARDS FOR REMOVING AND RECOVERING THE CHROMIUM CONTAINED IN THE EFFLUENTS**

BEHANDLUNG VON GERBEREIABWÄSSERN UND SUSPENSIONEN ZUM ENTFERNEN UND WIEDERGEWINNEN VON CHROM

TRAITEMENT D'EFFLUENTS SOLIDES ET LIQUIDES DE TANNERIES POUR L'ELIMINATION ET LA RECUPERATION DE CHROME CONTENU DANS CES EFFLUENTS

(84) Designated Contracting States:
**AT BE CH DE DK ES FR GB GR IE IT LI LU MC NL PT SE**

(30) Priority: **11.02.1993 ES 9300270**
**11.11.1993 ES 9302356**

(43) Date of publication of application:
**08.02.1995 Bulletin 1995/06**

(73) Proprietor:
**CONSEJO SUPERIOR DE INVESTIGACIONES CIENTIFICAS**
**28006 Madrid (ES)**

(72) Inventors:
- **AMER AMEZAGA, Sebastián,**
  **Avenida Gregorio del Amo, E-28040 Madrid (ES)**
- **AMUTIO POLO, Guillermo**
  **26 - 2 planta E-46010 Valencia (ES)**
- **COT COSP, Jaime**
  **Centro Investigacion y Desarrollo**
  **eeE-08034 Barcelona (ES)**
- **DE LA CUADRA HERRERA, Antonio**
  **Cent. Nac. Invt.**
  **Amo E-28040 Madrid (ES)**
- **LIMPO GIL, José, Luis**
  **Centro Nacional Investigaci**
  **Avenida Gregorio del Amo E-28040 Madrid (ES)**
- **LUIS MARTIN, Angel**
  **Centro Nac. Invt. Metulorgicas**
  **Aven. Gregorio del Amo E-28040 Madrid (ES)**
- **MANICH BOU, Alberto**
  **Centro Invest. y Desarrollo**
  **E-E-08034 Barcelona (ES)**

(74) Representative:
**Ungria Goiburu, Bernardo et al**
**Avda. Ramon y Cajal, 78**
**28043 Madrid (ES)**

(56) References cited:
**EP-A- 0 341 490** **ES-A- 538 759**
**GB-A- 2 118 559**

- **DAS LEDER vol. 28, num. 1 , Enero 1977 , DARMSTADT páginas 1 - 8 J.S.A.LANGERWERF ET AL. 'Fällung und Wiederverwendung des dreiwertigen Chroms' citado en la solicitud**
- **DATABASE WPI Section Ch, Week 9252, Derwent Publications Ltd., London, GB; Class D07, AN 92-431103 & RO,A,101 619 (PARTIZANUL INTR PIELARIE INCALTAMINTE) 28 Junio 1991**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 637 570 B1

Printed by Xerox (UK) Business Services
2.16.3/3.4

## Description

### Introduction

The tanning industry is considered as the cause of a considerable amount of pollution due to both its solid and liquid waste; a typical percentage distribution of the different effluents might be the following:

| | |
|---|---|
| Purifying plant sludges | 35.0% |
| Fats | 30.0% |
| Cutoff chippings or waste | 10.0% |
| Fleshing and gristle | 8.1% |
| Shavings | 6.0% |
| Trash (wood, plastics, etc.) | 10.9% |

Regarding solid waste, the partial percentages for different by-products varies widely according to the type of manufacturing (ovine, capric, bovine, etc.). As in the above case, and referring to the production of medium-fine skins (lamb), the following percentage distribution may be found:

| | |
|---|---|
| Fleshed and dry skin (for tanning) | 23% |
| Clean and dry wool (saleable) | 20% |
| Rough skin cuttings | 17% |
| Proteins dispersed in drainage water | 15% |
| Insoluble matter | 25% |

Cuttings have the following distribution:

| | |
|---|---|
| Collagen | 27% |
| Wool | 32% |
| Fatty matter | 15% |
| Others | 26% |

Proteins and insoluble matter are dumped into the sewage water from the tanning industry; insoluble matter (made up of fats, collagenic proteins and suety keratinics) and are in suspension in this water. The global DQO for these drainage waters is 2 500 ppm with a pH of 8.

The amount of water required (and therefore dumped) by the said industry is about 30 $m^3$/day.

The above problems worsen due to the almost generalised presence of chromium in cutoffs and shavings (coming from the tanning).

It is well known that in the last few years the tanning industries have been increasingly required to start with skins in a "wet-blue" state that generates greater quantities of this solid waste, composed 90% of proteins and 5 to 6% of chromium oxide.

With regard to the chromium content in the water, it is known that Cr(VI) is 100 times more toxic for mammals than Cr(III). It has been proved that at this valency, chromium is essential for many of the functions of the organism (it increases the action of insulin and retards arteriosclerosis) and its daily requirement is 62 μg/L, a larger amount than the average of 15 μg/L found during analyses of water. In any event, the content of Cr(III) in drainage water must be less

than 2 mg/L.

At this time Cr(VI) which previously was widely used in two bath tanning, has practically disappeared from tanyards. On the other hand, Cr(III) is currently the most important tanning agent and attempts to find a substitute for it have been without success. This means that chromium with this valency appears in important concentrations in tanning bath waste. Furthermore, the washing of *wet-blues* gives rise to the appearance of some 30 to 50 mg/L of chromium in drainage water, a figure that may fall to 6-10 mg/L in some cases but which in any event requires appropriate treatment to reduce these contents to preferably less than 1 mg/L.

The two most important operations carried out with the skins are: *washing* and *tanning*. When the skin is ready the *tanning* process begins where the Collagen structure is stabilized using natural or synthetic tanning products. The most widely used process is chromium tanning, with a process that may last between 4 and 24 hours.

The tanning product used is a complex hydrous sulphate of chromium III (with 22-25% $Cr_2O_3$) in an 8-12% preparation with 1% bicarbonate of soda as the base agent. Vegetable tanning is practically nonexistent and is only used in very special cases such as the preparation of skins for harness-making.

Products obtained during this process have a chromium content (expressed as $Cr_2O_3$) of about 3%. During the manufacture of products using tanned materials, an appreciable amount of waste skin is produced which because of its high chromium content should be sent to controlled dumps, with the ecological problems that this causes.

Although non-chromed by-products are easily disposed of for the preparation of different types of industrial glues and/or gelatins, chromed by-products are not acceptable for these, mainly because:

1) The presence of Cr(III), the Collagen tanning agent, acts to stabilize the structure of these by-products, making them more resistant to conditions conventionally used for the preparation of these glues and/or gelatins.

2) An attempt has been made to overcome the above problem by strengthening treatment conditions, for example by an increase in temperature and the modification of other variables, so that the protein becomes soluble; however, it continues to hold a sufficient amount of chromium to make it unusable in the foodstuffs field and, in general, of little use in the field of industrial glues since the residual chromium modifies their properties.

**State of the Art**

The tanning industry carries out research to eliminate to the maximum the chromium present in solid by-products. Processes have been suggested that use specific types of enzymes that act in the presence of Cr(III). A method has been patented in the United States that is based on the use of a 10% solution of sodium glycolate which acts at 40 °C at a pH of between 8 and 9 in two consecutive operations, following which the washed residue is treated with a 10% solution of NaOH with 20% $Na_2SO_4$; the washed residue is then treated with a solution containing 5% of $Na_2SO_4$ and 5% of $H_2O_2$; the pH is adjusted to 8 - 8,5 and the gelatine extracted with a 1% solution of magnesium oxide.

The greater part of the work carried out over the last few years, on the processing of solid wastes generated by the tanning industry, has a common factor, i.e. they apply a similar methodology with different details. For example, when attempting to process chromed by-products they are first dechromed, generally in the following manners: sequestering action of sodium glycolate (mentioned earlier), alkaline hydrolysis (with sodium hydroxide, calcic, magnesium oxide) or direct attack by enzymes; later, using a series of stages such as filtering, neutralizations and purifications, a protein hydrolysate is obtained; finally gelatine, animal glue, fertilizers, synthetic agglomerates, etc. are obtained. The treatment and revaluation of fleshing products by hydrolytic means is described in the following works:

- R. Lynton et al., JALCA, **22**, 301 (1982)
- Iv. Goschev, Iv. Botev, P. Nedkov, Das Leder, **19**, 56 (1985)
- P. Bataille and F. Gagnon, JALCA, **78**, 328 (1983)
- G. Guardini, JALCA, **81**, 78 (1986)
- J.Zuchowski, JSLTC, **71**, 15 (1986)
- W. Pauckner, Tech. Report, AIICA, n° 3, 8-16 (1987)
- A. Simoncini, G. de Simone, M. Tomaselli and G. Ummarino, Tech. Report, AIICA, n° 3, 17-27 (1987).

During the XXI Congress of the International Union of Leather Technologists and Chemists Societies (IULTCS) held in Barcelona on 25-29 September 1991, the following papers were read, related to these subjects:

- Ch. Poschenrieder, B. Gunse and J. Barcelo "Chromium, a major Problem Limiting the Agricultural Use of Tannery Sludges".
- G. Manzo and B. Naviglio "Semiindustrial Plant for Lipids and Proteins Meals Production from Chromed Residues or its Copolymers with MMA and AN".

- J. Mata-Alvares and F. Cecchi, "A Biotechnological Approach to Treat Vegetal Tannery Effluents".
- J. Salmeron, "Practical Example of Recuperation of non Tanned Residues".
- M. Taylor, E. Difendorf and W. Marmer, "Efficiency of the Enzymatic Solubilization of Chrome Shavings as influenced by Choice of Alkalinity-inducing Agents".

Spanish patent ES 538759 carries out the operation to eliminate chromium without the need to use sodium glycolate in shorter times than the above, introducing a grinding operation that facilitates the attack by hydrogen peroxide in an alkaline medium (6-12% $Na_2CO_3$) recovering the chromium in the solution, passing this through an ionic exchange column, following the technique described in Spanish patent ES 506254. Spanish patent ES P9200499, titled "Procedure for the integral treatment of tanning by-products through controlled attack with hydrogen peroxide" describes the elimination of chromium using treatment with oxygenated water in a salified alkaline medium with sodium sulphate. Both procedures, which have an undoubted technical value, suffer from two fundamental problems: the need to use much higher $H_2O_2$ contents than the stoichiometric and high carbonate and sulphates contents. The latter considerably increases the treatment cost since, although the ionic exchange *could* recover the Cr(VI) and recycle the solution, in practice in an alkaline medium the load capacity of Cr(VI) in an ionic exchange column is very small.

In any event, the elimination of chromium from solid wastes ends when this element passes into the solution. Furthermore, chroming operations which, as mentioned above, give rise to an important flow of water with high chromium contents, means that the elimination of this element from the water, either from tan-yards or from factories that treat the chromed products, is an inescapable problem for which various solutions have been proposed.

In view of the difficulty arising, for kinetic reasons, when using ionic exchange techniques, in order to be able to use these the oxidation of Cr(III) to Cr(VI) (Spanish patent ES 506.254) has been proposed, which is very easily fixed using ion exchanger resins which are eluted with a reducing solution (hydrogen peroxide in an acid medium) that changes the chromium back to Cr(III). McClellan et al. [B.E. McClellan, M.K. Meredith, R. Parmelle and J.P. Beck, *Ana. Chem.*, **46**(2), 306(1972)] describe the extraction of Cr(III) with amine trioctyl, using thiocyanate as the sequester of the chromium obtaining a refined product with less than 0.02 ppm of Cr but at a cost, as mentioned above, of a residence time of almost three hours.

A conventional method for separating Chromium(III) from its solutions is by precipitating it as hydroxide:

$$Cr^{3+} + 3OH \rightarrow Cr(OH)_3(act)$$

whose solubility product, according to Kovalenko [P.N. Kovalenko, *Ukr. Khim. Zh.* **22**, 801 (1956)] is $6.16 \cdot 10^{-31}$.

Bjerrum has studied solubility in an acid medium [J Bjerrum, *Z. Phys. Chem.* **73**, 724-59 (1910)] and Fricke and Windhausen in an alkaline medium [R. Fricke and O. Windhausen, *Z. anarg. allgem. Chem.* **132**, 273-88 (1924)] for orthorhombic violet hydroxide, with formula $Cr(OH)_3.nH_2O$ to which they assign a value of 3 for **n**.

Both in scientific publications and in patents, various reagents are described for use to precipitate the hydroxide, among them sodium hydroxide, ammonium and oxides (or hydroxides) of calcium and magnesium. The use of the latter compound, described in 1982 [K. Seubert and A. Schmidt, *Lieb. Ann.*, **267**, 218/48, 239 (1982)] has been proposed as the best by Langerwef and Wijs [J.S.A. Langerwef and J.C. de Wijs, *Das Leder*, **28**(1), 1 (1977)] in a bibliographic review of different ways of eliminating chromium from drainage waters from tan-yards.

The main problem for precipitating chromium in these drainage waters is the presence in them of sequester anions of Cr(III), principally formiates and glutamates. These ligands (represented here as L), when strongly joined with $Cr^{3+}$ according to the reaction

$$Cr^{3+} + nL^{-} \neg CrL_n^{3-n},$$

noticeably affect the solubility of the hydroxide.

This sequestering effect is used in US patent 4.560.546 (1983) which adds acetic acid or acetates to waste water before precipitation, by neutralization with sodium hydroxide at a pH between 7 and 10, obtaining better results with regard to decantability than when precipitation is carried out by only adding sodium hydroxide, ammonium or ammoniac carbonate as described in a prior patent [US 3.950.131 of 1973].

European patent EP 0003.862 [priority NL 7.802.123 of 25/02/78] also describes the precipitation of heavy metals, particularly chromium, alkalifying the solution up to a pH of between 5 and 10 and a at temperature between 60 and 100 °C.

Costas [D.I. Costas, *Ind. Usoara*, **33**(10), 446 (1986), cited in Chemical Abstract **107**, 113, 136253v (1987)] also separates the chromium from the tan-yard effluent using hot neutralization of the solution.

Special attention is drawn to European patent EP 0.341.490 [priority DE 3.815.948 of 10/05/88] which describes the precipitation of chromium in tan-yard drainage water, by the addition of magnesium oxide or hydroxide at a temperature above 50 °C and a pH between 8.2 and 9 (preferably 8.3 and 8.7) which in spite of the presence of carboxylic

sequester acids of Cr(III), gives a precipitate rich in chromium, reusable, and a solution with less than 1 mg/L of this element, although to aid in decantation flocculants must be added.

**Brief description of the invention**

The present invention covers the integral treatment of tan-yard waste containing chromium, according to a diagram described in figure 1.

One or two effluents are taken, solid **[1]** and/or liquid **[2]** containing chromium. The solid effluent undergoes treatment **[4]** with perborate **[3]**, described later, giving rise to a chromium free residue **[5]** that is treated by conventional methods (for example, hydrolysis to produce gums or chelagen) and waters which contain the chromium present as Cr(VI). This Cr(VI) is reduced to Cr(III) by reduction in an acid medium at **[6]**. In a reactor **[7]**, also described later, the solution or any other containing Cr(III) is treated continuously with an alkaline solution **[8]**, to give waters with less than 1 ppm of Cr **[9]** and a pulp **[10]** containing $Cr(OH)_3.3H_2O$ from which is obtained, by acidification with sulphuric acid, a concentrated solution of chromium sulphate reusable in the same tan-yard.

The present invention provides for the precipitation of the Cr(III) contained in solutions, *using* magnesium hydroxide but, different from that indicated in the state of the art, the magnesium hydroxide does not *necessarily* have to be the precipitating agent. The solution containing the chromium is added *slowly* and *continuously* to another solution maintained at a temperature above 55°C (preferably between 60 and 63°C) to which the magnesium hydroxide (or better still oxide) is also added *continuously*, preferably accompanied by a soluble alkali, for example a solution of NaOH. In this way, when precipitating the chromium (III) on the magnesium hydroxide, the precipitate formed has particular solubility and decantability characteristics not present when it is obtained with other neutralizers.

The new aspect of the present invention lies in the fact that the principal mission of the magnesium hydroxide is to act on the characteristics of the precipitate, while its action as a neutralizer is secondary in view of the fact that this second mission can be accomplished, as stated earlier, by the use of a reagent such as sodium hydroxide together with magnesium oxide (or hydroxide).

To carry out this operation, a *compartmented* reactor is required [6] as shown in figure 2, in which although three compartments have been drawn [6], [7] and [8], *only two are required*; although in the drawing the system whereby the reagents are mixed, and how the pulp passes from one reactor to another, has been defined, in practice it can be done in other ways, for example adding the neutralizer and the solution to be treated onto the surface of the first reactor and passing the pulp from the first to the second through the inside of the tank, or causing the reagents to reach below the level of the agitator, taking the overflow through a pipe from one reactor to the lower part of the next one, as shown in the drawing.

In this type of reactor, the solution to be treated [1] is introduced by a pump [2] into the first compartment [6] (initially holding only water). Using an appropriate dosage system (for example a hopper dosifier [3] and conveyor belt [4] as shown in the figure), the magnesium oxide (or hydroxide) is introduced and is drawn by a small flow of liquid (which can be a fraction of the treated solution [15]) and is mixed at a point opposite the feed intake with the solution in this compartment.

The magnesium can be dosed according to the Cr content in the feed solution. However, as this content may vary over the time that the operation lasts, it is best to regulate the addition of magnesium [MgO or $Mg(OH)_2$] by placing in this compartment a pH gauge [9] on which the set point *may be* between 7 and 7.5.

A heating system is included to maintain the temperature, measured by a thermometric sensor [10], above 55°C.

Finally, in order to obtain a concentration of Cr lower than 1 mg/L, the volume of each compartment must be such that the residence time of the solution (defined as the ratio between the reactor volume and the flow of solution passing through it) *in each one of them* is above a specific figure which is between *2 and 4 hours*.

The following operations to be carried out are totally conventional: the pulp leaving the reactor goes to a decanter [11] from which the overflow is the purified solution [15], which may be recycled in part to aid in introducing the neutralizer through [5]. The thickened product can be taken to a reactor [12] where, it is re-dissolved using sulphuric acid [13] to obtain an acid solution [14] which, appropriately neutralized, can be used again in the tan-yard.

Having solved the elimination of Cr(III) from tan-yard waters up to contents of less than 1 mg/L, it is more appropriate for the solution containing the Cr(VI) obtained from the oxidation of the chromium contained in the skins, to have the least possible salts content so that the reduction of Cr(VI) to Cr(III), which must be carried out in an acid medium, requires the lowest possible consumption of reagents.

The use of hydrogen peroxide to oxidize and solubilize the chromium set in the skin, has been described in the state of the art, but offers the problem of its high reactivity which demands the use of an important excess over the stoichiometry and the addition of a high content of alkaline salts (sodium carbonate) to the attack solution. The present invention proposes the substitution of oxygenated water by a soluble perborate (sodium) which, because of the equation

$$BO_3^- + H_2O \neg BO_2^- + H_2O_2$$

is able to contribute oxygenated water in sufficient concentration to oxidize the chromium without noticeably affecting the organic material, so that practically stoichiometric oxidant consumptions can be achieved with respect to the chromium, and the high contents of alkalis eliminated that make difficult the later precipitation of the chromium in the solution, according to the present invention.

Furthermore, the freed borate ion, according to the equation

$$BO_2^- + H^+ \neg HBO_2$$

blocked the solution in an appropriate manner so that the acid generated by the reaction

$$3BO_3^- + Cr_2O_3 + 2H_2O \rightarrow 2CrO_4^{2-} + BO_2 + 4H^+$$

makes it unnecessary to use any alkalinizer.

The greater cost of the perborate over oxygenated water is more than compensated for by the greater output by the reagent and the saving in alkalinizer.

Taking into account that the paste is soaked with the chromate solution, the amount of chromium retained can be decreased by an attack in counter-current, as shown in the diagram in figure 3, where **[1]** represents the reactor, **[2]** the solid/liquid separation system, **[3]** the lung tank and **[4]** the conditioning tank.

The attack on the product to be freed of chromium, is carried out in *n* stages in counter-current with recycling of the solution during each stage; during each of them a fraction of the solution is removed and sent to the mixer **[4]** where the perborate (or equivalent reagents) is added and the pH adjusted, returning the same volume of enriched solution. During the first stage the material, *P*, is received, optionally treated with formol, and the solution contains only the minimum perborate corresponding to the stoichiometry of the reaction; in this case, a volume equivalent to the enriched solution received is eliminated from the process as effluent, *E*, containing the chromium extracted from the product. During the last stage, *n*, the recycled solution is increased with washing water.

In the mixer **[4]** are brought together the volume from the *n* stages with the necessary reagents, *R*, to keep the solution at a pH of between 8.5 and 10, and with a perborate (or better, borax and oxygenated water) content of at least twice the minimum corresponding to the stoichiometry of the reaction. The ratio of solution to solid in the reactor **[1]** must be more than 2, preferably between 14 and 16 times the weight of dry solid.

Figure 4 shows in greater detail the recommended solution for which only two stages are used: the material from which the chromium is to be removed [10], chopped, is taken to a tank [1] where it is treated with a solution [13] of formol for preparation. The greater part of this solution is used after verifying in [2] the solid/liquid separation, and it is only necessary to add the water [11] and formol [12] that draws the paste [14].

The treatment with perborate is carried out in two stages in order to achieve greater efficiency in the chromium solubilization and, over all, so that the amount of Cr(VI) that is soaked into the paste [25] is reduced to the minimum, while the concentration of Cr(VI) in the drainage [17] is the maximum.

The stabilized product goes to a reactor [3] where it is treated with a recycled solution [16] and another [15] enriched with perborate; the pulp separates from the solution in [4] of which a fraction is the process effluent from which the chromium is recovered, while the other is [16] which is recycled. The paste goes to a second reactor [6] where it is treated with a part of the recycled solution [21] and the remainder [15] of the enriched solution; the pulp is separated from the solution in [7] and washed with water [24], leaving a chrome-free paste [25] and a solution which is a mixture of the filtrate and the washing water which is recycled. The remainder of the recycled solution [22] is received in a mixer [5]; in the solution the perborate [19], or the reagents to obtain it, is dissolved and the pH of the solution adjusted to 10 with soda or another alkali [20].

*Note*: We give the name *pulp* to a fluid mixture of solids and liquids (normally 5 to 10% solids) and *paste* to the wet solid (generally with 40% water) obtained following centrifugation.

## Detailed description of the invention

Below we shall describe separately the present invention, commencing with the treatment of liquid effluents (that in any case is essential) and afterwards that for solid effluents.

### *Treatment of liquid effluents*

With reference to the treatment of liquid effluents, the present invention is based on the solution from which the chromium must be removed, continuously reaching a pulp. In this pulp, the solid phase is formed essentially by the precipitated chromium hydroxide, with which a certain amount of *magnesium hydroxide* is maintained, either by adding this latter product or by its formation *in situ* from magnesium oxide.

The pH of the pulp may be set at any figure above 7, and the upper limit is not a constraint; the higher it is, the greater the excess magnesium oxide (or hydroxide) to be used. It has been found that a figure of 7.5 as the upper limit is sufficient.

To obtain a residual solution with a Cr(III) content less than 1 mg/L and a morphology that allows good decantation of the precipitate, the following operational conditions are required:

1 - The reactor in which the precipitation takes place must, as the reagent begin to reach it, be filled with an aqueous solution *at more than 55°C* (it has been found sufficient to hold it at 60°C ± 3°C). Although the precipitation reaction is exothermal [ΔH = -161.2 kJ/mol], a heating system must be available to maintain this temperature in the first reactor. In the second (and the third if used) reactor, heat insulation is sufficient to compensate for losses with the exterior.

2 - That when the reaction begins, the reagents (solution to be treated and precipitate) run continuously onto the water or previously treated solution.

3 - That there is $Mg(OH)_2$ in suspension at all times, which leads to two possible operating conditions:

a) The use of excess reagent above that corresponding to the reaction stoichiometry (condition that pertains if the magnesium is added as oxide and the pH is held above 7, and allowing a residence time in each reactor of 2 to 4 hours), or

b) Add a fixed amount of magnesium oxide (0.3 to 0.7 g per L of solution to be treated) while recycling part of the precipitate obtained (preferably more than 50%), and holding the pH in the first reactor between 7 and 7.5 by the continuous addition of a solution of soluble alkali (for example sodium hydroxide).

The latter alternative allows both a substantial decrease in the amount of magnesium oxide (between 5 and 10 times less, for a solution to be treated having some 5 to 7 g/L of Cr), and also a decrease in the required purity of the oxide. Figure 2 shows the introduction of the soluble alkali [16] using the dosing pump [17], while at the same time part of the chromium hydroxide precipitate obtained is recycled, pumped by [18].

*Treatment of solid effluents*

Oxidation with sodium perborate has shown itself to be more effective than oxygenated water, and no alkalinizer need be used since the borate formed during the reaction gives sufficient alkalinity. It has been found that, without the need to heat the solution and using excess perborate of less than 50% of the stoichiometric according to the reaction **[1]**, solubilization of more than 95% of the chromium is achieved. This reaction takes place fast so that in 10 minutes appreciable chromium solubilization has taken place, although the recommended time to reach solubilization of 95% of the chromium is 45 minutes.

The reaction that determines the reaction stoichiometry, presuming that the chromium is present in the skins as $Cr_2O_3$, is:

$$3BO_3^- + BO_2 + Cr_2O_3 + 2H_2O \rightarrow 2CrO_4^{2-} + 4HBO_2 \qquad [1]$$

in which, as can be seen, the presence of 1/3 *borate* is required which in turn blocks the solution according to the equation:

$$BO_2^- + H^+ \rightleftharpoons HBO_2 \qquad [2]$$

which borate is formed in the neutralization of recycled boric acid, format **[1]**

Although in the present invention the recycling of the solution is not essential, this operation is highly recommended for the reasons given below. If this recycling is not carried out, it has been found that borate is always present without the need to add it, either from the decomposition of the excess perborate itself:

$$BO_3^- \rightarrow \tfrac{1}{2}O_2 + BO_2 \qquad [3]$$

or from the reaction of the perborate with the formol added to stabilize the organic material:

$$2BO_3^- + HCHO \rightarrow CO_2 + 2BO_2^- + H_2O \qquad [4]$$

Recycling of the solution permits both the obtaining of chromium in the form of a more concentrated solution and a decrease in the volume of effluents from the plant, and as a consequence a reduction in the equipment required to recover chromium from the effluent and comply with the corresponding environmental specifications.

As indicated when describing the block diagram in figure 4, when recycling the solution a preparation tank **[5]** must be available in which to replace the perborate consumed during the reaction or, as stated, it must be produced "in situ" by conventional processes.

It is well known [see, for example, Kirk-Othmer, *Encyclopedia of Chemical Technology*, Wiley, New York 1978-1982. Vol. 17, page 7] that perborate is obtained from borax by its reaction with oxygenated water:

$$Na_2B_4O_7\cdot 10H_2O + 2NaOH + 4H_2O_2 + H_2O \rightarrow 4NaBO_3\cdot 4H_2O \qquad [5]$$

As can be seen from equation **[5]**, soda must be added in order to form perborate. Within the process subject of the present invention, this addition leads to the danger that *due to an excess of alkalinity* the perborate may decompose since, according to Smith and Martel [R.M. Smith and A.E. Martell, *Critical Stability Constants*, vol. 4, Penum Press, New York 1976] it has the following equations

$$BO_2^- + H_2O_2 \neg BO_3^- + H_2O \qquad [6]$$

whose constant at 25°C is 20.9 and

$$H_2O_2 \neg HO_2^- + H^+ \qquad [7]$$

left, *and the effect of the perborate is lost.*

To avoid this it is necessary to have boric acid present in the solution at all times, in the form of the equation

$$HBO_2 \neg BO_2^- + H^+ \qquad [8]$$

whose constant $5.8 \cdot 10^{-10}$ means that the solution is blocked at a pH of 9.2, lower than 11.7 which is the *admissible limit* according to **[7]**.

[Note: At an ionic strength of 1 the value of the constant for equation **[8]** decreases to $1.41 \cdot 10^{-9}$ according to which the pH at which the solution is blocked decreases to approximately 8.9].

Since the attack must be carried out in an alkaline medium and the dissociation of the oxygenated water avoided, when starting with mixtures of oxygenated water and borax the pH must be maintained between 8.5 and 10, by the addition of the necessary amounts of sodium hydroxide or other soluble alkali. Preferably between 8.5 and 9.5 and *never more than 11.5 or less than 7.5.*

In this in situ generation of perborate, the recycling of the solution means an appreciable saving of borax (or borate in general), because the solution already holds an appreciable amount of this salt.

Therefore in the preparation tank **[5]** perborate can be added or the *equivalent amount* of oxygenated water, an

amount of borate (in any of its commercial forms) less than the stoichiometry and, in this case, sodium hydroxide in sufficient quantity to hold the pH of the solution at between 8.5 and 9.5.

The process for the treatment of solids consists basically of mixing the chromed material (preferably stabilized with formol) with a perborate solution, continuously agitating the pulp, without the need for heating, for a period between 10 minutes and 1 hour (preferably 45 minutes), and thereafter the solution is separated, preferably by centrifuging, and lastly the chrome-free material is washed with water. In practice, if this simple method is used practical problems may arise, especially with regard to effluents and process costs, that may impede its correct industrial application; for this reason recycling and optimization processes must be used that, while not affecting the essentials of the process, make it more viable. Among the possible different solutions, figure 8 gives a *recommended* process.

The basic equipment is made up of:

*Preparation block:*

A. Reception hopper
B. Chopping mill
C. Stabilization tank
D. Basket centrifuge

*First attack block:*

E. First attack tank
F. First attack lung tank
G. Basket centrifuge

*Second attack block:*

H. Final attack lung tank
I. Final attack tank
J. Basket centrifuge

*Reagent adjustment block:*

K. Reagent adjustment tank

*Cr recovery block:*

L. Acidification and reduction tank
M. Lung tank for Cr(III) solution
N. Neutralization tank
O. Refining tank
P. Decanter

The product flows [#] are listed in Table I. The dosing of reagents is carried out according to the Cr content (expressed as $Cr_2O_3$). For each unit of contained chromium and per 1000 kg of material (dry) [# 11], the quantities indicated in Table II are used.

TABLE I

| # | Name | # | Name |
|---|---|---|---|
| 11 | Chromed material | 26 | Chrome-free paste |
| 12 | Formol 40% | 27 | Solution from 2nd centrifuging |
| 13 | Recycled solution | | |
| 14 | Pulp | 28 | Borax |
| 15 | Washing water | 29 | Soda 50% |
| 16 | Wet paste | 30 | Oxygenated water 50% |

TABLE I (continued)

| # | Name | # | Name |
|---|---|---|---|
| 17 | Recycled solution for first attack | 31 | Recharged solution for 2nd attack |
| 18 | Overflow solution | 32 | Sodium bisulphide 30% |
| 19 | Pulp from first attack | | |
| 20 | Recharged solution for first attack | 33 | Sulphuric acid 98% |
| | | 34 | Cr(III) solution |
| 21 | Paste from first attack | 35 | Soda 50% |
| 22 | Solution from first centrifuge | 36 | Suspension of $Cr(OH)_3$ |
| 23 | Solution for second attack | 37 | Residual water |
| 24 | Pulp from second attack | 38 | Thick pulp of $Cr(OH)_3$ |
| 25 | Washing water | 39 | Load solution |
| | | 40 | Recharged solution |

TABLE II

| # | Name | Kg |
|---|---|---|
| 12 | Formol 40% | 9-10 |
| 15 | Washing water | 800 - 1,200 |
| 25 | Washing water | 2.000 - 4.000 |
| 28 | Borax ($Na_2B_4O_7 \cdot 10H_2O$) | 2.5 - 4.4 |
| 29 | Soda (NaOH) 50% | 1.5 - 3.0 |
| 30 | Oxygenated water 50% | 3.0 - 5.3 |
| 32 | 30% solution of $NaHSO_3$ | 9-11 |

**Description of the figures**

Figure 1 *Block diagram of the invention*

1 Solid effluent to be treated
2 Liquid effluent to be treated
3 Perborate solution
4 Dissolving of chromium
5 Chrome-free solid
6 Reduction in acid medium of Cr(VI) to Cr(III)
7 Chromium precipitation
8 Alkalinization
9 Chrome-free water
10 Recoverable chromium hydroxide

Figure 2 *Diagram of the process using NaOH or other soluble neutralizer*

[1] Solution to be treated
[2] Constant flow pump
[3] Reagent hopper [MgO or $Mg(OH)_2$]
[4] Reagent dosifier

[5] Reagent and flow water discharge funnel
[6] First reactor compartment
[7] Second reactor compartment
[8] Third reactor compartment (optional)
[9] pH gauge
[10] Temperature gauge
[11] Thickener
[12] Pulp re-dissolving tank
[13] Concentrated sulphuric acid
[14] Outlet for concentrated solution of chromium (III) sulphate
[15] Purified solution
[16] Solution of NaOH or other neutralizer soluble in water
[17] Dosing pump for neutralizer solution
[18] Pulp recycling pump

Figure 3 *General Diagram of solids treatment*

I, II, n-1, m Stages
P Product to be treated
E Aqueous effluent
A Washing water
D Chrome-free product
1 Reactor
2 Solid/liquid separation
3 Lung tank
4 Mixing tank

The dotted lines indicate that there may be intermediate stages.

Figure 4 *Block diagram of solids treatment process in two stages*

*Equipment:*

1. Material preparation
2. S/L separation
3. First attack with perborate
4. S/L separation
5. Solution regeneration
6. Second attack with perborate
7. S/L separation

*Flows*:

| | | | |
|---|---|---|---|
| 10. | Material for chromium removal | 18. | Paste from 1st treatment |
| 11. | Water | 19. | Perborate |
| 12. | Formol | (20. | Borate + oxygenated water) |
| 13. | Recycled solution | 21. | Attack solution |
| 14. | Stabilized paste | 22. | Recycled solution |
| 15. | Attack solution | 23. | Washing water |
| 16. | Recycled solution | | |
| 17. | Liquid effluent with Cr | | |

Figure 5 *Layout of experimental device used in examples 1 to 6*

[1] Jacketed 2 L reactor
[2] Jacketed 2 L reactor
[3] Decantation receptacle
[4] 4 mm diam. solution intake pipe
[5] 10 cm diam. magnesium intake nozzle
[6] 4 mm diam. solution overflow pipe
[7] 4 mm diam. solution overflow pipe
[8] Sampling device
[9] 4 mm diam. solution overflow pipe

Figure 6 *Decantation curve for chromium (III) hydroxide obtained*

Ordinates, height in cm
Abscissas, time in min

Figure 7 *Thermogravimetric curve for chromium (III) hydroxide obtained*

Continuous line, loss of weight; dotted line, derivative
Ordinates: % of weight
Abscissas: Temperature in °C
Conditions:

Sample weight 27.7333 g (dried in oven at 105°C)
Heating speed 10°C/min

Figure 8 *Layout of preparation (Example 8)*

*Equipment:*

| | | | |
|---|---|---|---|
| A. | Reception hopper | K. | Reagent adjustment tank |
| B. | Chopping mill | L. | Acidification and reduction tank |
| C. | Stabilization tank | M. | Cr(III) solution tank |
| D. | Basket centrifuge | N. | Neutralization tank |
| E. | First attack tank | O. | Refining tank |
| F. | First attack lung tank | P. | Decanter |
| G. | Basket centrifuge | Q. | First washing tank |
| H. | Final attack lung tank | R. | Centrifuge |
| I. | Final attack tank | S. | Second washing tank |
| J. | Basket centrifuge | T. | Centrifuge |

*Flows:*

| | | | |
|---|---|---|---|
| 11 | Chromed material | 26 | Chrome-free paste |
| 12 | Formol 40% | 27 | Solution from 2nd centrifuge |
| 13 | Recycled solution | 28 | Borax |

(continued)

| | | | |
|---|---|---|---|
| 14 | Pulp | 29 | Soda 50% |
| 15 | Washing water | 30 | Oxygenated water 50% |
| 16 | Wet paste | 31 | Recharged solution for 2nd attack |
| 17 | Recycled solution for 1st attack | 32 | Sodium bisulphide 30% |
| 18 | Overflow solution | 33 | Sulphuric acid 98% |
| 19 | Pulp from first attack | 34 | Cr(III) solution |
| 20 | Recharged sol. for 1st attack | 35 | Soda 50% |
| 21 | Paste from first attack | 36 | Suspension of $Cr(OH)_3$ |
| 22 | Sol. from 1st centrifuge | 37 | Residual water |
| 23 | Solution for 2nd attack | 38 | Thick $Cr(OH)_3$ pulp |
| 24 | Pulp from 2nd attack | 39 | Solution for charging |
| 25 | Washing water | 40 | Recharged solution |

## Examples

For the *water treatment* a magnesium has been used that corresponds to a product with the quality of *reagent for analysis* under the Probus® brand, with a minimum MgO content of 97%, and maximum iron 0.01% and heavy metals (expressed in Pb) of 0.003%. Figure 5 shows the device, at laboratory scale, used to carry out the tests described in the following examples. It consists of two glass reactors [1] and [2] with their corresponding heating jackets to thermostatize the solution; the useful volume of each reactor is 2.1 L. Each reactor has a blade agitator 42 mm in diameter that is turned by a motor (not shown in the figure) at 1000 rpm.

The solution to be treated reaches the reactor [1] impelled by a dosing pump and is placed in the bottom of the reactor by a pipe [4]. The magnesium (MgO) enters every 5 minutes in weighed amounts through a nozzle [5] and is dragged from the walls by a distilled water piston in a syringe so that the volume injected following each addition of magnesium, is known. The pulp overflows at [6] and passes to the bottom of the reactor [2] from where it passes through [7] and reaches a 5 L receptacle [3] that acts as a decanter, with the purified solution exiting via the overflow [9]. In [7] there is a lateral pipeline [8] with its end clipped, for removing samples periodically.

<u>Example n° 1. Test with MgO alone</u>

The operating conditions were:

Temperature in reactors: 60 - 62 °C
Solution flow: 1 L/h
Magnesium added: **0.45 g every 5 min**
Flow water: 8 mL every 5 min (0.096 L/h)
Residence time in each reactor: **2.08 h**
pH in first reactor: 6.7 to 7.0

Result: Concentration of Cr(III) in sampler [8] *filtered*: 8.3 mg/L

<u>Example n° 2. Test with MgO alone</u>

The following operating conditions were used:

Temperature in reactors: 60 - 62 °C
Solution flow: 1 L/h
Magnesium added: **0.63 g every 5 min**
Flow water: 8 mL every 5 min (0.096 L/h)
Residence time in each reactor: **2.08 h**
pH in first reactor: 7.1 to 7.3

Result: Concentration of Cr(III) in sampler [8] *filtered*: 3.9 mg/L

Example n° 3. Test with MgO alone

Operating conditions:

Temperature in reactors: 60 - 62 °C
Solution flow: 0.6 L/h
Magnesium added: **0.45 g every 5 min**
Flow water: 8 mL every 5 min (0.096 L/h)
Residence time in each reactor: **3.2 h**
pH in first reactor: 7.25 to 7.6

Result: Concentration of Cr(III) in sampler [8] *filtered*: **0.6 mg/L**

Since the test was carried out beginning with the first reactor charged with water and the second reactor empty, it is appropriate to discover by analysis of the magnesium when the stationary state is reached. Table II gives the contents of Cr and Mg in a pulp taken from the outlet from the second reactor after sedimentation over 2 hours and filtering of the floating liquid.

The decantability of the pulp coming from the second reactor was measured and the curve obtained that is shown in figure 6. It should be noted that it is difficult to measure the height at which the separation surface occurs, indicated by a shaded area; in any event the floating liquid appears cloudy.

The speed of sedimentation, 36 mm/min (2160 mm/h) is almost 10 times greater than that indicated in the Wijs revision (op.cit.) of 250 mm/h.

Analyzing the cloudy product, a chromium content of 2 mg/L is found which decreases to 0.6 on filtering the solution.

TABLE III

| Evolution of the Cr and Mg at the reactor outlet | | |
|---|---|---|
| Time, h | Cr, mg/L | Mg, g/L |
| 3* | 0.58 | 1.13 |
| 4 | 0.70 | 1.28 |
| 5 | 0.70 | 1.56 |
| 6 | 0.60 | 1.71 |
| 7 | 0.75 | 1.93 |
| 8 | 0.60 | 2.10 |
| 10 | 0.60 | 2.08 |

* Pulp begins to flow from 2nd reactor

Solids content in thick pulp: 34%

The thick pulp, filtered and dried at 105°C, had the following composition:

| | |
|---|---|
| Cr | 24.5% |
| Mg | 18.0% |

Figure 7 shows the thermogravimetric curve.

The X-ray diagramme shows no line to allow its crystalline identification.

Example 4. Test with sodium hydroxide and magnesium oxide

Using the same solutions as in the previous examples, the test was repeated under equivalent conditions to those in example 3. When the second reactor began to overflow (3 hours after beginning the test) the chromium content in the filtered solution was 0.2 mg. From that moment the addition of magnesium was decreased from 0.31 g every 5 minutes to 0.10 g every 15 minutes; the pulp flowing from the reactor was collected every 15 minutes in a receptacle where it was left to sediment, returning the solid residue from one of each of the two receptacles (i.e. 50% of the precipitate obtained) to the first reactor. Simultaneously a solution 2N of NaOH began to be pumped to the first reactor, adjusting the flow so that the pH in the first reactor was held at between 7.2 and 7.5. The result obtained is shown in Table IV:

TABLE IV

| Evolution of the Cr and Mg at the reactor outlet | | |
|---|---|---|
| Time, h | Cr, mg/L | Mg, g/L |
| 3 | 0.2 | |
| 6 | 0.7 | 0.80 |
| 10 | 1.4 | 0.39 |
| 12 | 2.1 | 0.32 |
| 13 | 2.7 | 0.29 |
| 15 | 2.5 | 0.29 |
| 18 | 2.6 | 0.27 |

Soda consumption was: 1.08g/min <> 0.06 l/h
Solids content in thickened pulp: 26.7%

Example 5. Influence of the amount of magnesium added

After 18 hours of testing example 4, the addition of magnesium was double, while the rest of the operating conditions remained the same.

Table V gives the figures obtained (times are counted starting with test 4).

TABLE V

| Evolution of the Cr and Mg at the reactor outlet | | |
|---|---|---|
| Time, h | Cr, mg/L | Mg, g/L |
| 20 | 1.8 | 0.38 |
| 22 | 1.9 | 0.44 |
| 24 | 1.8 | 0.46 |
| 26 | 1.9 | 0.48 |
| 28 | 1.8 | 0.51 |

Example 6. Influence of the recycling of hydroxide

After 28 h of testing example 10 the recycling of chromium hydroxide was eliminated, maintaining all other operating conditions.

Table VI shows the figures obtained (times counted from the end of test 5)

TABLE VI

| Evolution of the Cr and Mg at the reactor outlet | |
|---|---|
| Time, h | Cr, mg/L |
| 30 | 2.8 |
| 32 | 3.25 |
| 34 | 3.15 |
| 36 | 3.2 |
| 37 | 3.1 |
| 38 | 3.1 |

Example 7. Direct treatment of solid residues

This begins with chopped material containing 3% chromium (expressed as $Cr_2O_3$). One kilo of this product is taken and repulped in 15 L of water to which are added 50 g of formol and sufficient sodium bicarbonate, $NaHCO_3$, to obtain a pH of 7. Thereafter 300 g of perborate sodium tetrahydrate Q.P., $NaBO_3.4H_2O$, are added.

The mixture is agitated for half an hour and the pulp centrifuged, washing the paste with water, without removing it from the centrifuge, until the Cr(VI) cannot be detected from its yellow colour in the washing water.

The product obtained, dried at 105°C, gave a $Cr_2O_3$ content of less than 0.01%.

Example 8. Treatment with recycled solutions

The same raw material was used as for the previous example. In a receptacle 15 L of a solution were prepared containing 54.5 g of formol (136 g of solution at 40%) and a pH 7.0 achieved by neutralization of the free acid with sodium bicarbonate. This solution is mixed (according to the layout in figure 8) in an agitation reactor **C** with 1 kg of raw material to be treated **[11]**. After 15 minutes of agitation, the pulp is discharged into a basket centrifuge **D** where the retained solid is washed with 900 ml of water **[15]**, collecting 1.9 kg of wet solid **[16]** and 15 L of solution that is reused to treat a new amount of product, after adding, **[12]**, 11 g of formol (27.5 solution at 40%) to compensate for the formol drawn off by the wet product, and sodium bicarbonate to return to pH to 7.0.

This product is treated as follows: Three agitator reactors are used, **E** and **I** with 20 L capacity, and another **K** of 6 L, and two storage receptacles **F** and **G** with 20 L capacity, and two basket centrifuges **H** and **J**. For the first operation the tank **E** is loaded with a solution with the following composition:

| | |
|---|---|
| $NaBO_3$ | 350 g |
| $NaBO_2$ | 40 g |
| $HBO_2$ | 105 g |
| $Na_2CrO_4$ | 290 g |
| Water up to | 17 L |

and in tank **I** a solution containing:

| | |
|---|---|
| $NaBO_3$ | 224 g |
| $NaBO_2$ | 9 g |

(continued)

| | |
|---|---|
| $HBO_2$ | 30 g |
| $Na_2CrO_4$ | 100 g |
| Water up to | 14 L |

The stabilized paste **[16]** from the stabilization stage is added to tank **E**. This is agitated for 45 min and the pulp **[19]** passed to the basket centrifuge **H**, sending the solution **[22]** to tank **F** and the paste **[21]** to tank **I**, where it is agitated for 45 min, and thereafter the pulp **[24]** is centrifuged by **J** and the paste washed in 3 L of water **[25]**. The solution and washing water **[27]** are sent to tank **G**.

The following operations are carried out in the following manner:

* From tank **G** 25% of its volume is taken **[39]**, which is discharged into **K** and the remaining 75% **[23]** into **I**.
* From tank **F** 14.5 L are taken **[17]**, which are discharged into **E** and the remainder **[18]** is eliminated as effluent (for chromium recovery).
* To tank **K** is added in this order:

| | |
|---|---|
| **[28]** Borax ($Na_2B_4O_7.10H_2O$) | 130 g |
| **[30]** Oxygenated water ($H_2O_2$) 110 vol. | 265 cc |
| **[29]** Soda (NaOH), 50% solution | up to pH=9.5 |
| (**Note:** do not add the oxygenated water until all the borax is dissolved, heating slightly if necessary; once a pH of 9 is reached, add the soda slowly so that the pH does not rise above 10). | |

* From tank **K** 25% of its volume is taken **[31]**, which is discharged into tank **I** and the remaining 75% **[20]** is discharged into tank **E**.
* New stabilized paste **[16]** is loaded into tank **E** and agitated for 45 min and centrifuged. The solution **[22]** goes to **F** and the paste **[21]** to **I** where, with the original solution, it is agitated for 45 min and centrifuged and washed with 3L of water **[25]**, sending the solution **[27]** to **G**.

The operation is repeated as often as necessary. The product obtained [26] gives the following analysis:

| **Attack N°** | Cr in the pulp, % | | $Na_2CrO_4$ in effluent **[18]** g/L |
|---|---|---|---|
| | 1 washing **[26]** | 3 washes with repulping | |
| 1 | 0.12 | 0.05 | 18 |
| 2 | 0.11 | 0.06 | 17 |
| 3 | 0.13 | 0.05 | 18 |

## Claims

**1.** Treatment of solid and liquid effluents from tan-yards for removing and recovering the contained chromium, characterized in that the treatment comprises the following steps:

in a first step applicable to solid residues, the chromium is solubilized by attack with a solution of perborate in an alkaline medium, giving rise to a chromium free residue and waters which contain chromium as Cr(VI), whereafter said chromium Cr(VI) is reduced to Cr(III) by reduction in acid medium, whereby a solution containing Cr(III) is obtained;

in a second step, applicable to the solution containing Cr(III) obtained in the first step and to other liquid effluent solutions containing Cr(III), the chromium containing solution is added slowly and continuously to another solution in an agitator reactor, initially filled with water, which is held at a temperature above 55°C, to which is also continuously added magnesium hydroxide or magnesium oxide, whereby the chromium is precipitated in the form of hydroxide;

subsequently, sending the pulp obtained to a second reactor, preferably with the same capacity as the first, the average residence time in each reactor, defined as the ratio between the reactor volume and the volumetric flow, being above a minimum of between 2 and 4 hours;

the addition of magnesium hydroxide or magnesium oxide is regulated by the measurement of the pH in the first reactor; the pH must not be less than 6;

the pulp obtained from the second reactor is decanted to obtain an effluent which is discharged and a chromium enriched pulp which upon acidification can be reused in the tan-yard.

**2.** Treatment of solid and liquid effluents from tan-yards for removing and recovering the contained chromium, according to claim 1, characterized in that the oxidation is carried out by agitation of the chopped residues with an aqueous solution containing a perborate in a proportion of at least 1.5 mol of $BO_3^-$ per at-g of Cr contained in the residues (for example, 2.35 g of $NaBO_3$ per g of Cr), for a period of more than 10 min, with the recommended amount of perborate used, if sodium salt is used, of 3.3 to 3.7 g of $NaBO_3$ per g of Cr contained in the residue to be treated, and the recommended attack time is 45 min.

**3.** Treatment of solid and liquid effluents from tan-yards for removing and recovering the contained chromium, according to claim 1, characterized in that part of the magnesium oxide (or hydroxide) may be substituted by sodium hydroxide or other soluble alkali to hold the pH in the reactor, provided that this substitution is carried out after sufficient precipitate of chromium (III) hydroxide is available to be able to return part of this precipitate to the first reactor, preferably more than 50% of the product formed, and that the amount of magnesium oxide (or hydroxide) added, expressed as pure oxide, is not less than 0.3 g per L of solution to be treated (preferably 0.7 g/L).

**4.** Treatment of solid and liquid effluents from tan-yards for removing and recovering the contained chromium, according to claims 1 and 2, characterized in that the perborate may be substituted by a mixture of oxygenated water, $H_2O_2$, and a borate (for example borax) in a solution whose pH must be between 7.5 and 11.5, preferably between 8.5 and 9.5.

**5.** Treatment of solid and liquid effluents from tan-yards for removing and recovering the contained chromium, according to claims 1, 2 and 4, characterized in that for the attack a proportion of solution to solid residue (dry) is used of more than 2, preferably 15.

**6.** Treatment according to any of claims 1, 2, 4 and 5, wherein the attack with perborate on the solid residue during said first step of the treatment is performed in a sequence of substeps, the pulp of the solide residue being mixed with an alkaline solution of perborate during each of said substeps; at the end of each substep, the pulp is separated from the solution and is passed to the next substep, while, in each substep except in the first one, a first portion (preferably 75%) of the solution is reused at the same substep and a second portion is transferred to a preparation tank where perborate is added and where pH adjusting agents are added to maintain the pH at the desired level, whereafter the solution is recycled to the different sub-steps; in the first substep, a chromium-containing solution is obtained which is passed to said second step of the treatment.

**7.** Treatment of solid and liquid effluents from tan-yards for removing and recovering the contained chromium, according to claims 1 to 6, characterized in that the chromium contained in the residue to be treated passes to a solution from which the chrome is recovered as $Cr(OH)_3.nH_2O$, with the effluent remaining with a low saline content.

**8.** Treatment according to claim 1, wherein the temperature in the agitater reactor of the second step is held between 60 and 63°C.

**9.** Treatment according to claim 1, wherein the pH in the first reactor is not more than 8.

**10.** Treatment according to claim 9 wherein the pH in the first reactor is between 7 and 7.5.

## Patentansprüche

1. Behandlung von festen und flüssigen Abfällen aus Gerbereien zum Entfernen und Rückgewinnen des darin enthaltenen Chroms, **dadurch gekennzeichnet**, daß die Behandlung die folgenden Schritte umfaßt:

   in einem ersten Schritt, der auf feste Rückstände anwendbar ist, wird das Chrom durch die Einwirkung einer Lösung von Perborat in einem alkalischen Medium löslich gemacht, was zu einem chromfreien Rückstand und Wässern führt, welche Chrom als Cr(VI) enthalten, wonach das Chrom Cr(VI) durch Reduktion in saurem Medium zu Cr(III) reduziert wird, wodurch eine Lösung erhalten wird, die Cr(III) enthalt;

   in einem zweiten Schritt, der auf die Cr(III)-haltige Lösung, die im ersten Schritt erhalten wurde, und auf andere flüssige Abfallösungen, die Cr(III) enthalten, anwendbar ist, wird die chromhaltige Lösung langsam und kontinuierlich zu einer weiteren Lösung in einem Rührreaktor gegeben, welcher zu Beginn mit Wasser gefüllt ist, welches auf einer Temperatur über 55°C gehalten wird, zu dem auch kontinuierlich Magnesiumhydroxid oder Magnesiumoxid zugegeben wird, wodurch das Chrom in Form des Hydroxids ausgefällt wird;

   anschließend wird der erhaltene Brei in einen zweiten Reaktor, vorzugsweise mit dem gleichen Fassungsvermögen wie der erste, überführt, wobei die mittlere Verweilzeit in jedem Reaktor, die als Verhältnis zwischen dem Reaktorvolumen und dem Volumenstrom definiert ist, über einem Minimalwert von 2 bis 4 Stunden liegt;

   die Zugabe von Magnesiumhydroxid oder Magnesiumoxid wird durch die Messung des pH-Werts in dem ersten Reaktor gesteuert; der pH-Wert darf nicht weniger als 6 betragen;

   der aus dem zweiten Reaktor erhaltene Brei wird dekantiert, um eine Abfallösung, welche ausgetragen wird, und einen mit Chrom angereicherten Brei zu erhalten, welcher nach einer Ansäuerung in der Gerberei wiederverwendet werden kann.

2. Behandlung von festen und flüssigen Abfällen aus Gerbereien zum Entfernen und Rückgewinnen des darin enthaltenen Chroms nach Anspruch 1, **dadurch gekennzeichnet**, daß die Oxidation durch Verrühren der zerhackten Rückstände mit einer wäßrigen Lösung, die ein Perborat in einem Verhältnis von mindestens 1,5 Mol $BO_3^-$ pro Grammatom in den Rückständen enthaltenem Cr enthält (z.B. 2,35 g $NaBO_3$ pro g Cr), während eines Zeitraums von mehr als 10 Minuten erfolgt, wobei die empfohlene Menge des verwendeten Perborats, wenn das Natriumsalz verwendet wird, 3,3 bis 3,7 g $NaBO_3$ pro g in dem zu behandelnden Rückstand enthaltenem Cr beträgt und die empfohlene Einwirkungsdauer 45 Minuten beträgt.

3. Behandlung von festen und flüssigen Abfällen aus Gerbereien zum Entfernen und Rückgewinnen des darin enthaltenen Chroms nach Anspruch 1, **dadurch gekennzeichnet**, daß ein Teil des Magnesiumoxids (oder -hydroxids) durch Natriumhydroxid oder ein anderes lösliches Alkali ersetzt werden kann, um den pH-Wert in dem Reaktor aufrechtzuerhalten, vorausgesetzt, daß diese Ersetzung erfolgt, nachdem ein ausreichender Niederschlag von Chrom(III)hydroxid zur Verfügung steht, so daß ein Teil dieses Niederschlags in den ersten Reaktor zurückgeführt werden kann, vorzugsweise mehr als 50 % des gebildeten Produkts, und daß die Menge des zugegebenen Magnesiumoxids (oder -hydroxids), ausgedrückt als reines Oxid, nicht weniger als 0,3 g pro l der zu behandelnden Lösung (vorzugsweise 0,7 g/l) beträgt.

4. Behandlung von festen und flüssigen Abfällen aus Gerbereien zum Entfernen und Rückgewinnen des darin enthaltenen Chroms nach den Ansprüchen 1 und 2, **dadurch gekennzeichnet**, daß das Perborat durch ein Gemisch aus Wasserstoffperoxid, $H_2O_2$, und einem Borat (z.B. Borax) in einer Lösung ersetzt werden kann, deren pH zwischen 7,5 und 11,5, vorzugsweise zwischen 8,5 und 9,5 liegen muß.

5. Behandlung von festen und flüssigen Abfällen aus Gerbereien zum Entfernen und Rückgewinnen des darin enthaltenen Chroms nach den Ansprüchen 1, 2 und 4, **dadurch gekennzeichnet**, daß für die Einwirkung ein Verhältnis der Lösung zu dem festen Rückstand (trocken) von mehr als 2, vorzugsweise 15 eingesetzt wird.

6. Behandlung nach einem der Ansprüche 1, 2, 4 und 5, worin die Einwirkung des Perborats auf den festen Rückstand während des ersten Schritts der Behandlung in einer Abfolge von Teilschritten erfolgt, wobei der Brei des festen Rückstands mit einer alkalischen Lösung von Perborat während jedem dieser Teilschritte vermischt wird; am Ende von jedem Teilschritt der Brei von der Lösung abgetrennt und zu dem nächsten Teilschritt überführt wird, während in jedem Teilschritt mit Ausnahme des ersten, ein erster Teil (vorzugsweise 75 %) der Lösung in dem gleichen Teilschritt wiederverwendet wird und ein zweiter Teil in einen Aufbereitungsbehälter überführt wird, wo Perborat zugegeben wird und Mittel zum Einstellen des pH-Werts zugegeben werden, um den pH auf dem gewünschten Wert zu halten, wonach die Lösung zu den verschiedenen Teilschritten zurückgeführt wird; und in dem ersten Teilschritt eine chromhaltige Lösung erhalten wird, welche zu dem zweiten Schritt der Behandlung geleitet wird.

**7.** Behandlung von festen und flüssigen Abfällen aus Gerbereien zum Entfernen und Rückgewinnen des darin enthaltenen Chroms nach den Ansprüchen 1 bis 6, **dadurch gekennzeichnet**, daß das in dem zu behandelnden Rückstand enthaltene Chrom in eine Lösung übergeht, aus der das Chrom als $Cr(OH)_3 \cdot nH_2O$ zurückgewonnen wird, wobei in dem Abfall ein niedriger Salzgehalt zurückbleibt.

**8.** Behandlung nach Anspruch 1, worin die Temperatur in dem Rührreaktor des zweiten Schritts zwischen 60 und 63°C gehalten wird.

**9.** Behandlung nach Anspruch 1, worin der pH in dem ersten Reaktor nicht mehr als 8 beträgt.

**10.** Behandlung nach Anspruch 9, worin per pH in dem ersten Reaktor zwischen 7 und 7,5 liegt.

**Revendications**

**1.** Traitement d'effluents solides et liquides de tanneries pour l'élimination et la récupération du chrome contenu, caractérisé en ce que le traitement comprend les étapes suivantes :

dans une première étape applicable aux résidus solides, le chrome est solubilisé par attaque avec une solution de perborate dans un milieu alcalin, pour engendrer un résidu exempt de chrome et des eaux contenant du chrome sous forme de Cr(VI), après quoi ledit chrome Cr(VI) est réduit en Cr(III) par réduction dans un milieu acide, si bien qu'une solution contenant Cr(III) est obtenue ;
dans une deuxième étape, applicable à la solution contenant Cr(III) obtenue dans la première étape et à d'autres solutions d'effluents liquides contenant Cr(III), la solution contenant du chrome est ajoutée lentement et de façon continue a une autre solution dans un réacteur-agitateur, initialement rempli d'eau, qui est maintenue à une température supérieure à 55°C, à laquelle de l'hydroxyde de magnésium ou de l'oxyde de magnésium est également ajouté de façon continue, si bien que le chrome est précipité sous la forme d'hydroxyde ;
ensuite, la pâte obtenue est envoyée dans un second réacteur, ayant de préférence la même capacité que le premier, le temps de séjour moyen dans chaque réacteur, défini comme le rapport entre le volume du réacteur et le débit volumétrique, étant supérieur à un minimum compris entre 2 et 4 heures ;
l'addition d'hydroxyde de magnésium ou d'oxyde de magnésium est régulée par la mesure du pH dans le premier réacteur ; le pH ne doit pas être inférieur à 6 ;
la pâte obtenue en provenance du second réacteur est décantée pour donner un effluent qui est évacué et une pâte enrichie en chrome qui, après acidification, peut être réutilisée dans la tannerie.

**2.** Traitement d'effluents solides et liquides de tanneries pour l'élimination et la récupération du chrome contenu, selon la revendication 1, caractérisé en ce que l'oxydation est effectuée par agitation des résidus hachés avec une solution aqueuse contenant un perborate en une proportion d'au moins 1,5 mole de $BO_3^-$ par atome-gramme de Cr contenu dans les résidus (par exemple, 2,35 g de $NaBO_3$ par gramme de Cr), pendant une période supérieure à 10 min, la quantité recommandée de perborate à utiliser, si l'on utilise le sel de sodium, étant de 3,3 à 3,7 g de $NaBO_3$ par gramme de Cr contenu dans le résidu à traiter, et le temps d'attaque recommandé étant de 45 min.

**3.** Traitement d'effluents solides et liquides de tanneries pour l'élimination et la récupération du chrome contenu, selon la revendication 1, caractérisé en ce qu'une partie de l'oxyde (ou hydroxyde) de magnésium peut être remplacée par de l'hydroxyde de sodium ou autre alcali soluble de façon à maintenir le pH dans le réacteur, à condition que cette substitution soit effectuée une fois qu'un précipité suffisant d'hydroxyde de chrome(III) est disponible pour qu'une partie de ce précipité puisse être ramenée au premier réacteur, de préférence plus de 50 % du produit formé, et que la quantité d'oxyde (ou hydroxyde) de magnésium ajoutée, exprimée en oxyde pur, ne soit pas inférieure à 0,3 g par litre de solution à traiter (de préférence 0,7 g/ℓ).

**4.** Traitement d'effluents solides et liquides de tanneries pour l'élimination et la récupération du chrome contenu selon les revendications 1 et 2, caractérisé en ce que le perborate peut être remplacé par un mélange d'eau oxygénée, de $H_2O_2$ et d'un borate (par exemple le borax) dans une solution dont le pH doit être compris entre 7,5 et 11,5, de préférence entre 8,5 et 9,5.

5. Traitement d'effluents solides et liquides de tanneries pour l'élimination et la récupération du chrome contenu, selon les revendications 1, 2 et 4, caractérisé en ce que, pour l'attaque, on utilise un rapport de la solution au résidu solide (sec) supérieur à 2, de préférence 15.

6. Traitement selon l'une quelconque des revendications 1, 2, 4 et 5, dans lequel l'attaque du résidu solide par le perborate pendant la première étape du traitement est effectuée en une succession de sous-étapes, la pâte du résidu solide étant mélangée avec une solution alcaline de perborate pendant chacune desdites sous-étapes ; à la fin de chaque sous-étape, la pâte est séparée de la solution et amenée à la sous-étape suivante, tandis que, dans chaque sous-étape à l'exception de la première, une première portion (de préférence 75 %) de la solution est réutilisée dans la même sous-étape et une seconde portion est transférée dans une cuve de préparation où le perborate est ajouté et où des agents d'ajustement du pH sont ajoutés de façon à maintenir le pH à la valeur souhaitée, après quoi la solution est recyclée vers les différentes sous-étapes ; dans la première sous-étape, on obtient une solution contenant du chrome qui est amenée à ladite seconde sous-étape du traitement.

7. Traitement d'effluents solides et liquides de tanneries pour l'élimination et la récupération du chrome contenu, selon les revendications 1 à 6, caractérisé en ce que le chrome contenu dans le résidu à traiter passe dans une solution à partir de laquelle le chrome est récupéré sous forme de $Cr(OH)_3.nH_2O$, l'effluent restant avec une faible teneur en sel.

8. Traitement selon la revendication 1, dans lequel la température du réacteur-agitateur de la deuxième étape est maintenue entre 60 et 63°C.

9. Traitement selon la revendication 1, dans lequel le pH dans le premier réacteur n'est pas supérieur à 8.

10. Traitement selon la revendication 9, dans lequel le pH dans le premier réacteur est compris entre 7 et 7,5.

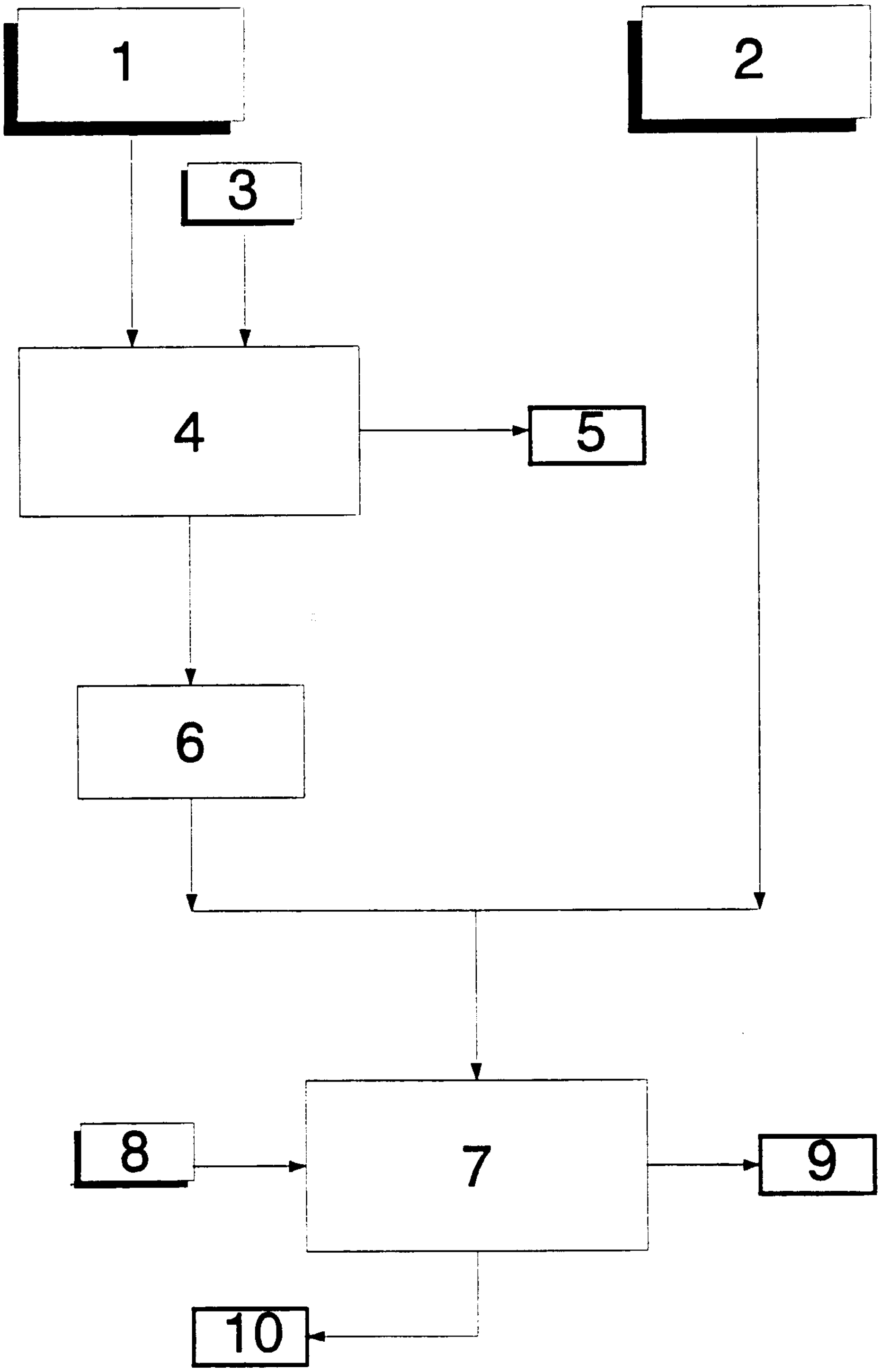


Figure 1

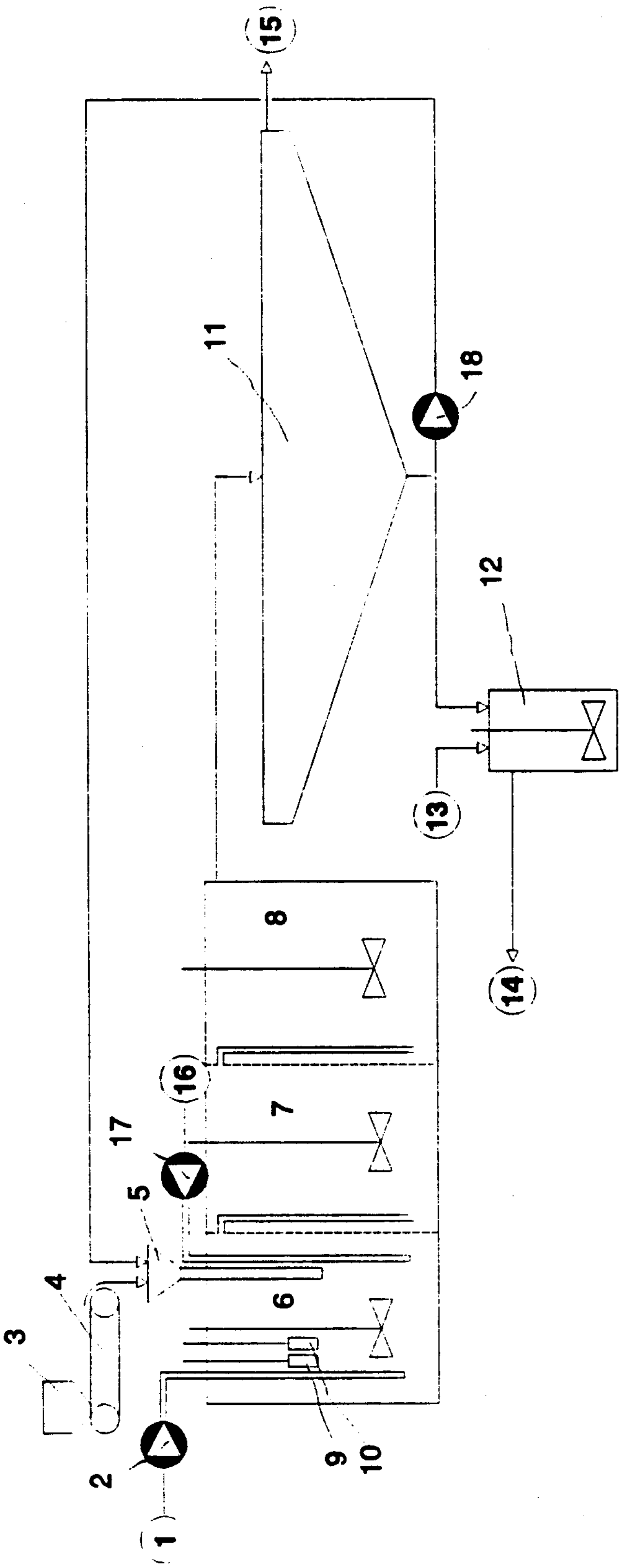


Figure 2

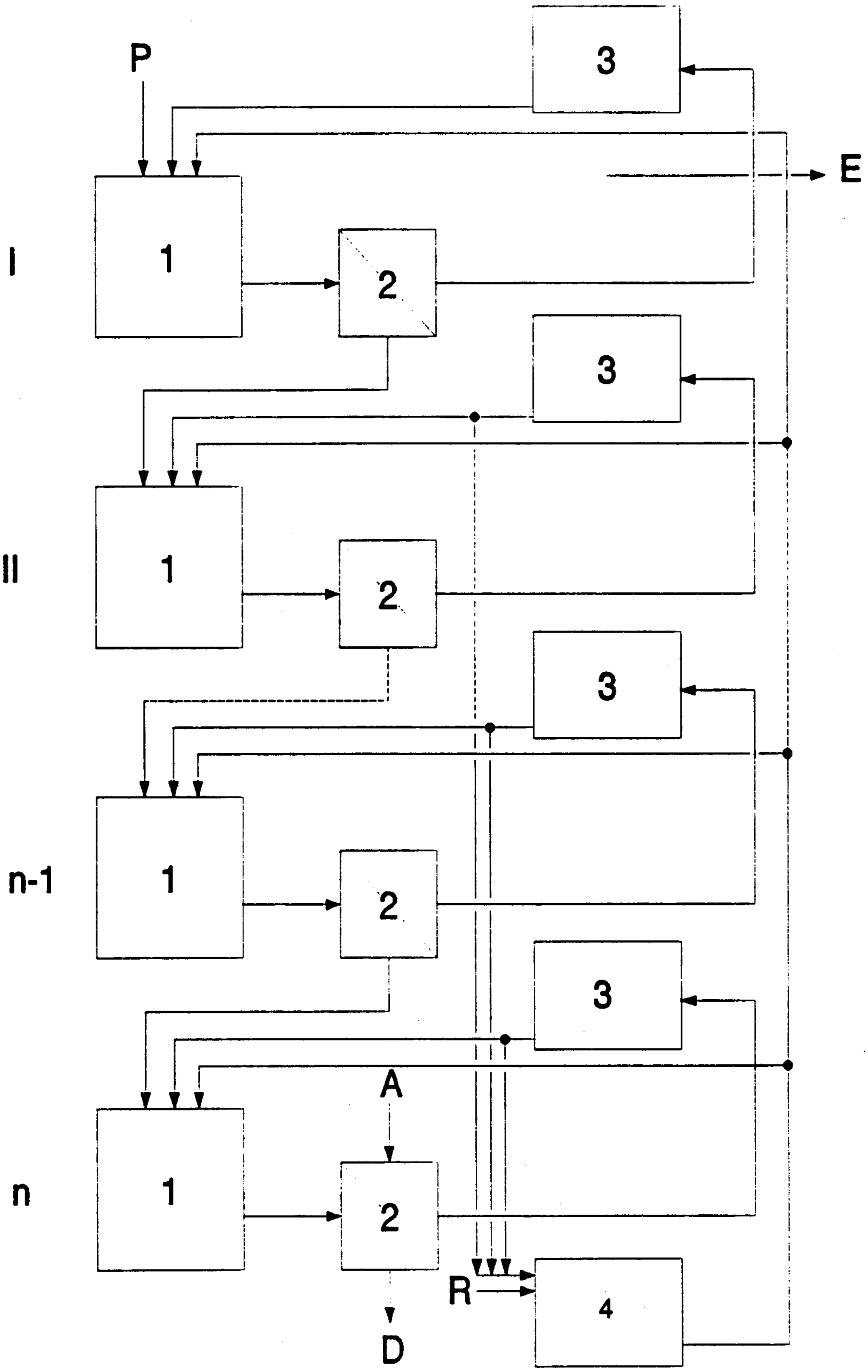


Figure 3

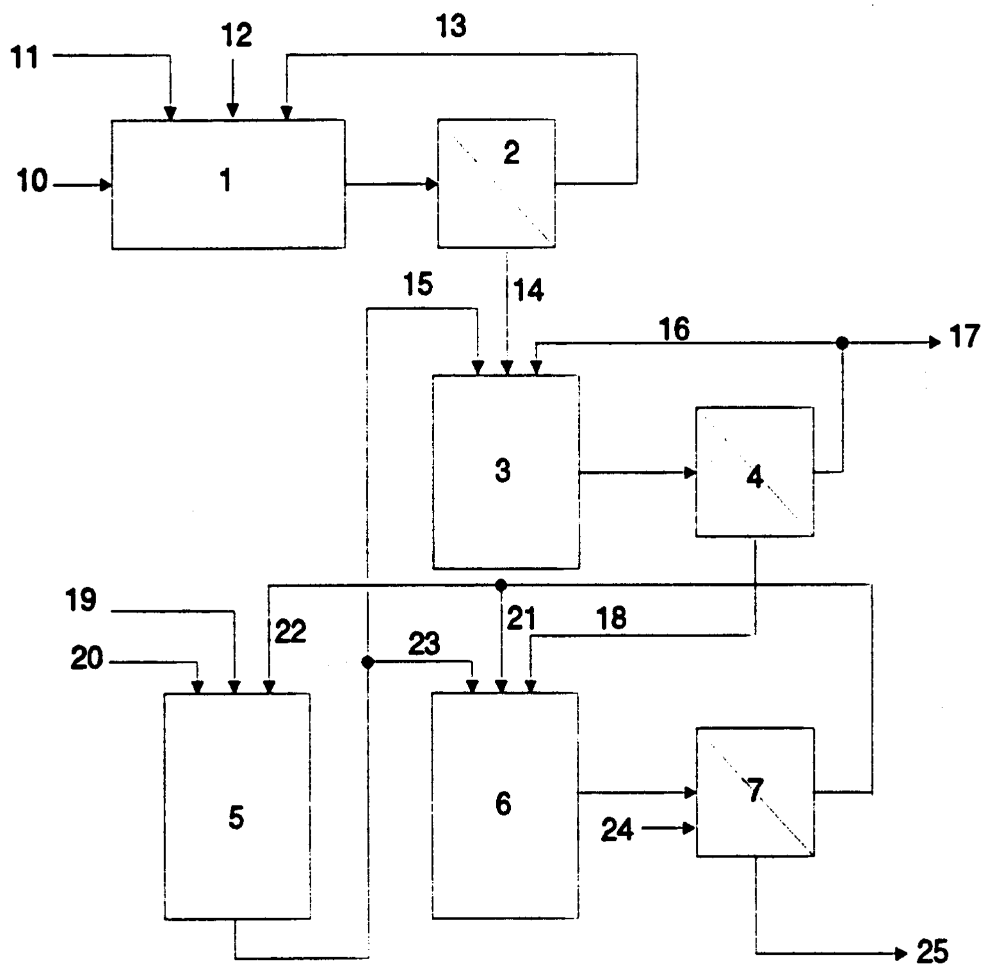


Figure 4

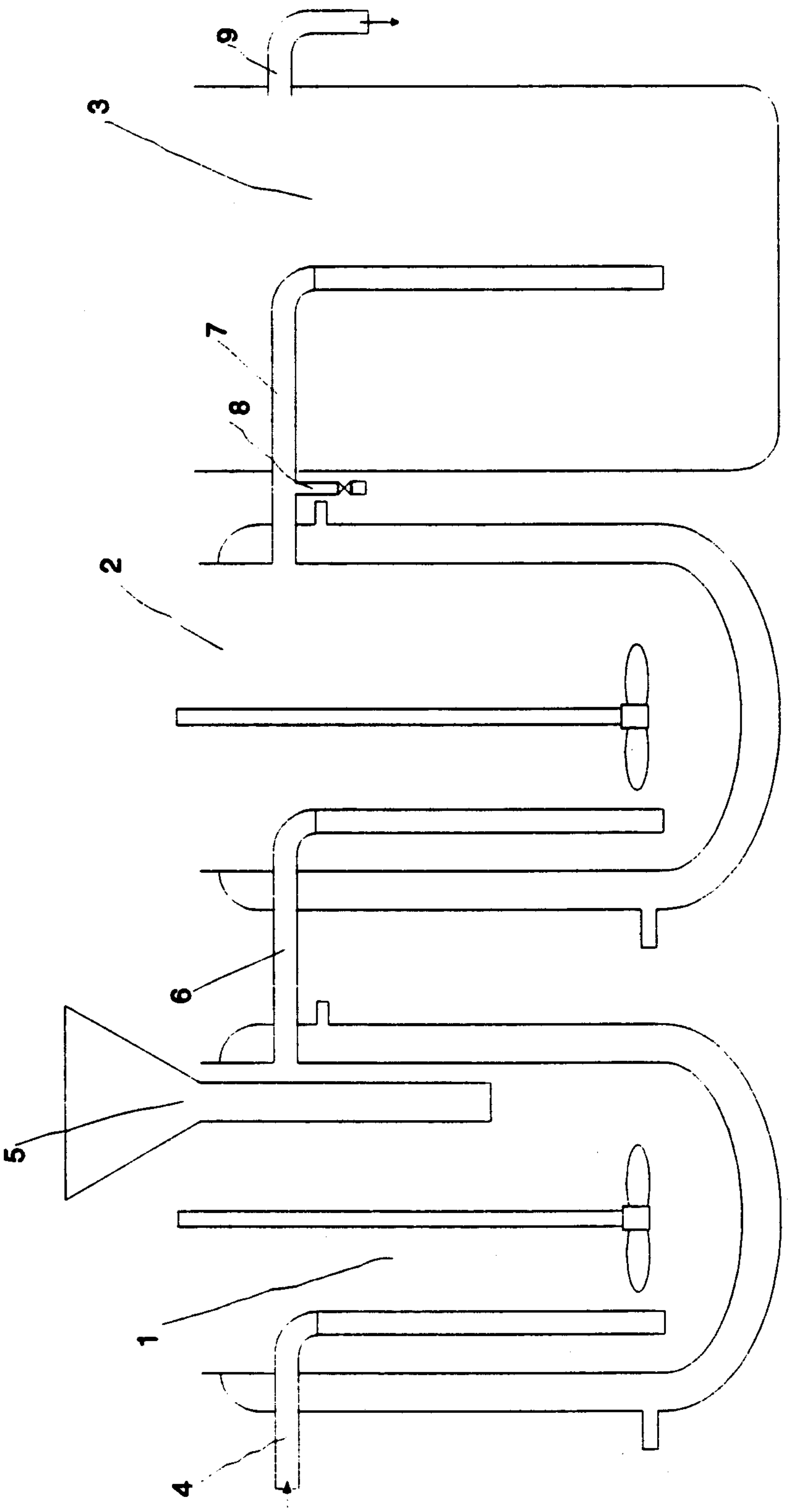


Figure 5

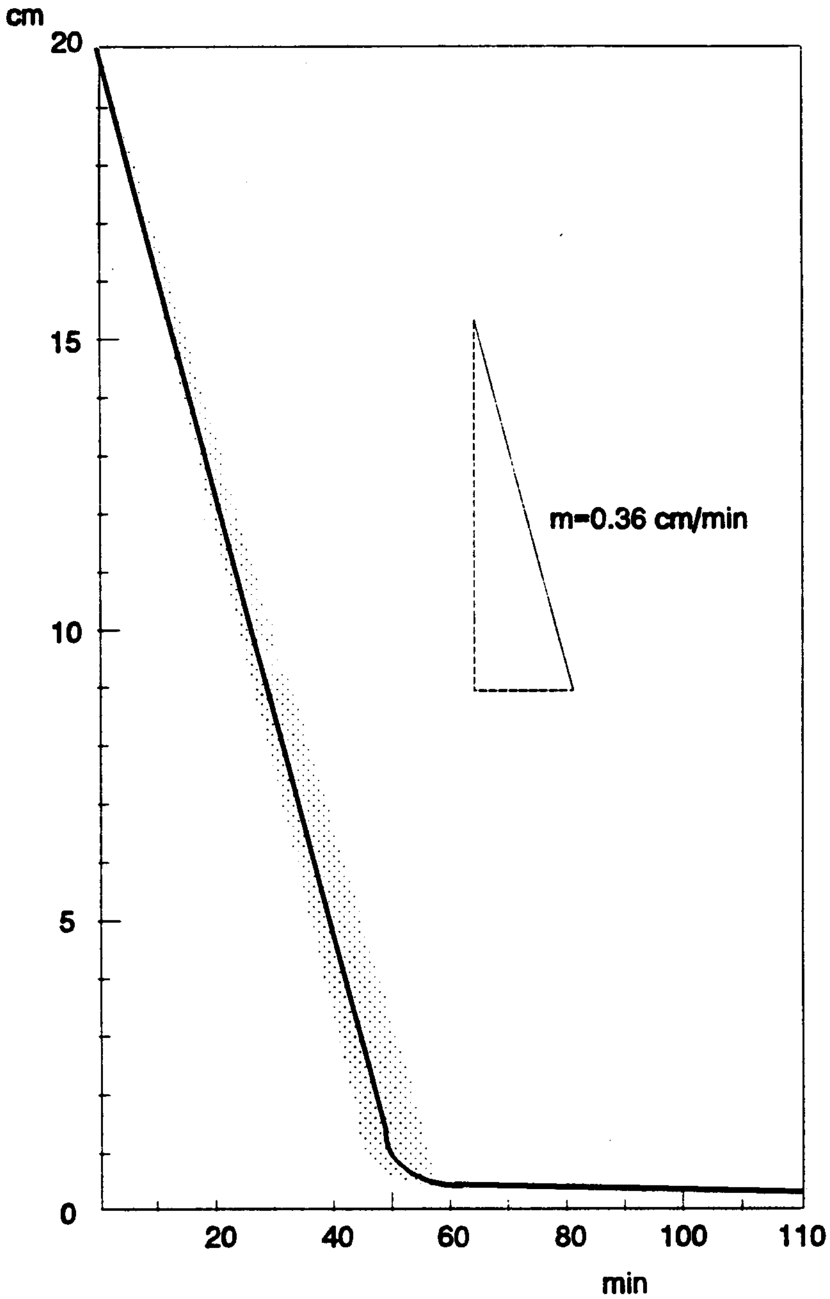


Figure 6

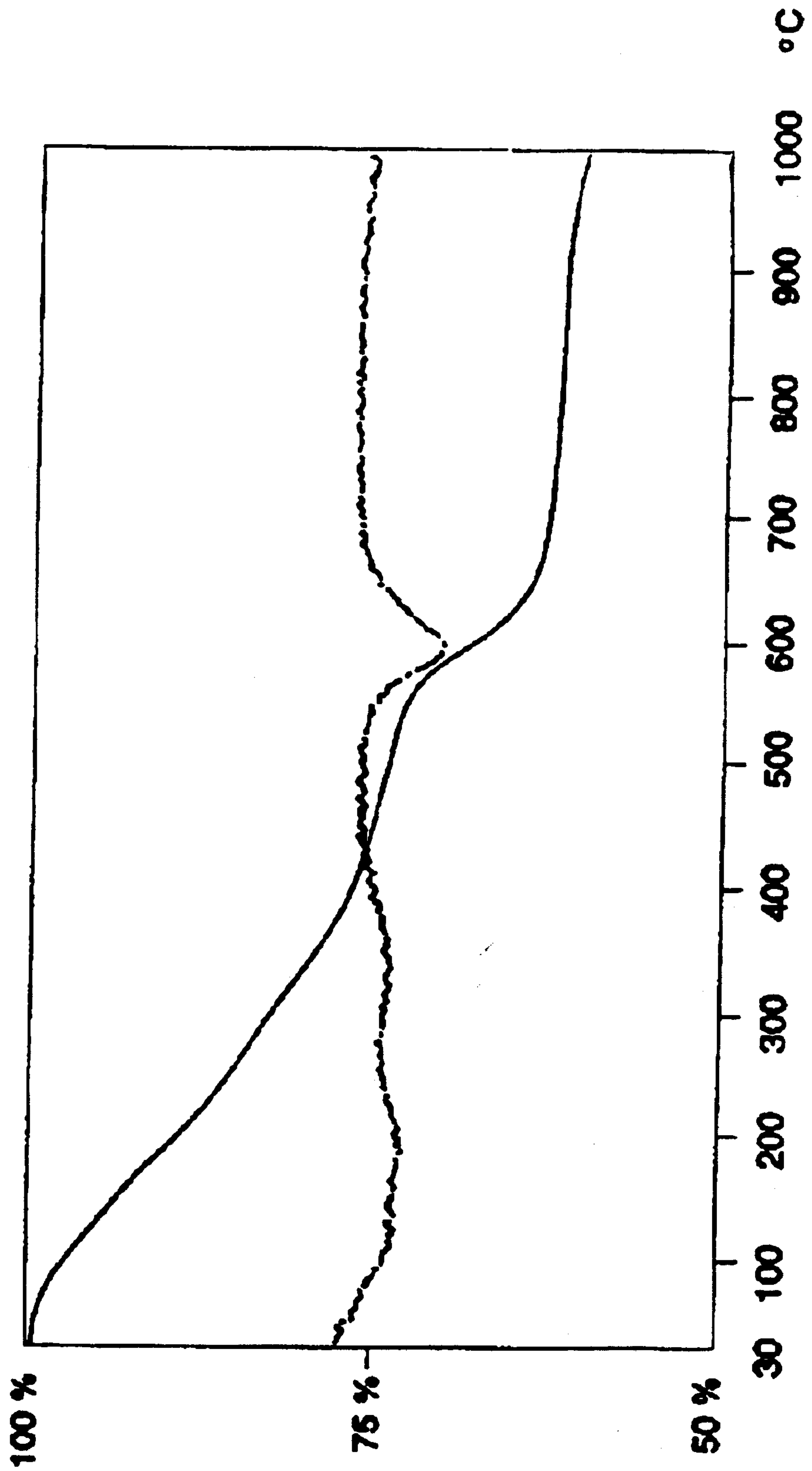


Figure 7

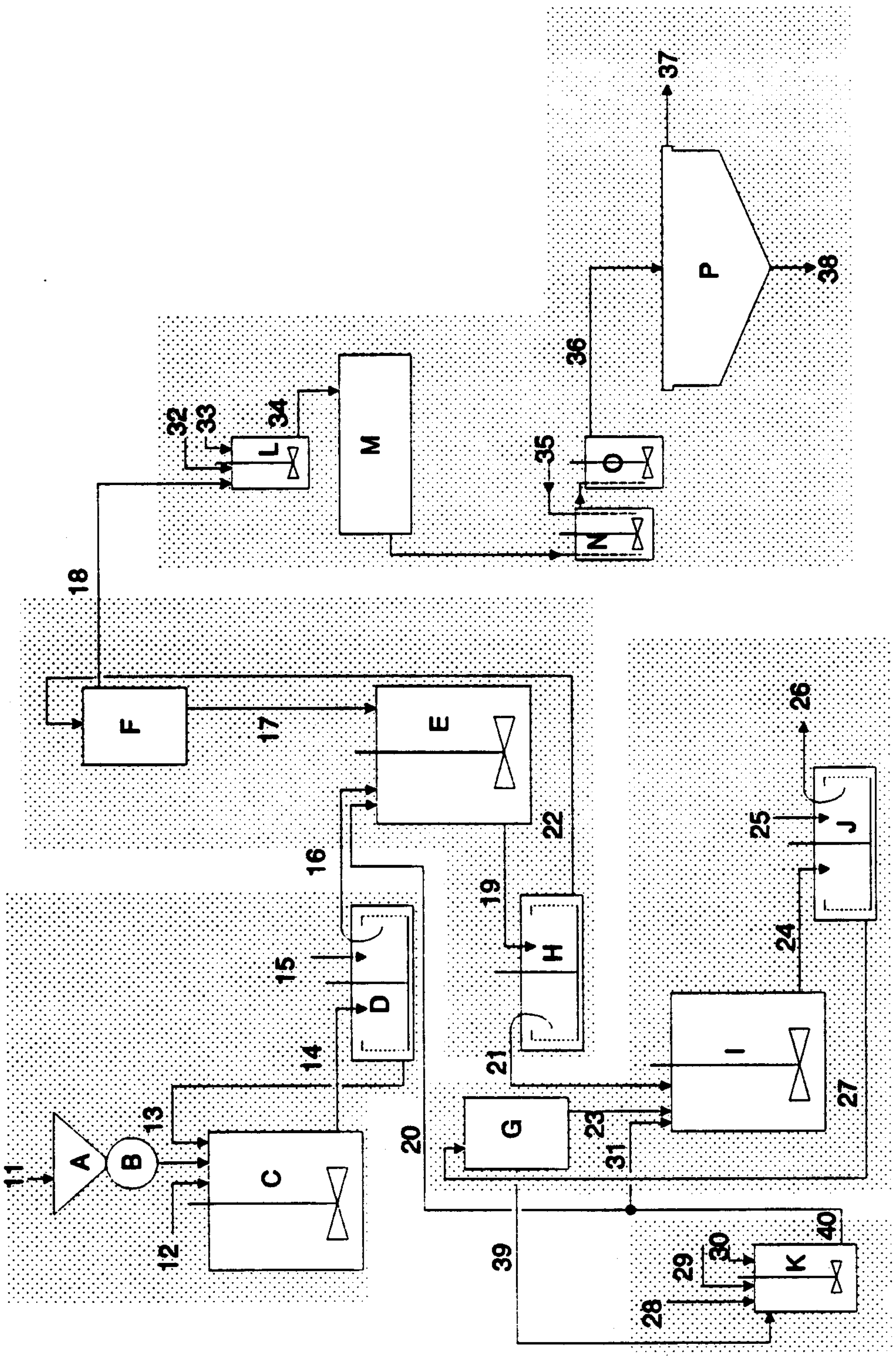
A
B
C
D
E
F
G
H
I
J
K
L
M
N
O
P
11
12
13
14
15
16
17
18
19
20
21
22
23
24
25
26
27
28
29
30
31
32
33
34
35
36
37
38
39
40

Figure 8